(19) Europäisches Patentamt
European Patent Office
Office européen des brevets

(11) **EP 3 490 176 A1**

(12) **EUROPEAN PATENT APPLICATION**
published in accordance with Art. 153(4) EPC

(43) Date of publication:
**29.05.2019 Bulletin 2019/22**

(51) Int Cl.:
***H04L 1/00*** *(2006.01)*

(21) Application number: **17830367.3**

(22) Date of filing: **06.07.2017**

(86) International application number:
**PCT/CN2017/091961**

(87) International publication number:
**WO 2018/014733 (25.01.2018 Gazette 2018/04)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **22.07.2016 CN 201610585883**

(71) Applicant: **Shenzhen Super Data Link Technology Ltd.**
**Shenzhen, Guangdong 518000 (CN)**

(72) Inventors:
• **LIU, Ruopeng**
 **Shenzhen**
 **Guangdong 518057 (CN)**

• **JI, Chunlin**
 **Shenzhen**
 **Guangdong 518057 (CN)**
• **XU, XingAn**
 **Shenzhen**
 **Guangdong 518057 (CN)**
• **ZHANG, Shasha**
 **Shenzhen**
 **Guangdong 518057 (CN)**

(74) Representative: **Goddar, Heinz J.**
 **Boehmert & Boehmert**
 **Anwaltspartnerschaft mbB**
 **Pettenkoferstrasse 22**
 **80336 München (DE)**

(54) **DECODING METHOD, DEVICE SUITABLE FOR OVXDM SYSTEM AND OVXDM SYSTEM**

(57)     The present invention discloses a decoding method and a device applied to an OvXDM system, and an OvXDM system. A node in a Trellis diagram corresponding to the OvXDM system is selected in a decoding process. A superior path is selected by improving a method for calculating an accumulated branch measurement and with reference to a weighting factor. In addition, a node with a smallest accumulated branch measurement is extended, and a best decoding path is selected. When the present invention is applied to a decoding process of an OvXDM system in which a quantity of times of overlapped multiplexing or a quantity of coding branches is relatively large, design complexity and a calculation amount of the OvXDM system are reduced, so that the OvXDM system has a relatively low bit error rate, and performance thereof is improved.

FIG. 2

**Description**

TECHNICAL FIELD

Embodiments of the present invention relate to a signal processing field, and in particular, to a decoding method and a decoding device which are applied to an OvXDM system, and an OvXDM system.

BACKGROUND

When decoding is performed in an overlapped multiplexing system, regardless of an overlapped time division multiplexing (OvTDM, Overlapped Time Division Multiplexing) system, an overlapped frequency division multiplexing (OvFDM, Overlapped Frequency Division Multiplexing) system, an overlapped code division multiplexing (OvCDM, Overlapped Code Division Multiplexing) system, an overlapped space division multiplexing (OvSDM, Overlapped Space Division Multiplexing) system, an overlapped hybrid division multiplexing (OvHDM, Overlapped Hybrid Division Multiplexing) system, or the like, a node in a trellis (Trellis) diagram corresponding to the OvXDM system needs to be continuously accessed. In addition, two memories are disposed for each node. One is configured for storing a relative best path for reaching the node, and the other is configured for storing a measurement corresponding to the relative best path for reaching the node. When the measurement corresponding to the relative best path for reaching the node is calculated, a conventional method is usually adding an accumulated branch measurement of a node at a previous moment to a transient branch measurement of a node at a current moment, so that an accumulated branch measurement of the node at the current moment can be obtained. Such an accumulated branch measurement of a node is widely applicable. However, when decoding is performed in the overlapped multiplexing system, all state nodes and extended paths thereof usually need to be processed as described above, so that a relatively accurate decoding result can be obtained.

SUMMARY

To solve the aforementioned problem, the present invention provides a decoding method and a decoding device applied to an OvXDM system, and an OvXDM system.

According to a first aspect of the present invention, the present invention provides a decoding method which is applied to an OvXDM system, and comprising the following steps:

calculating an accumulated branch measurement of a node; and
performing a decoding operation based on the accumulated branch measurement;
wherein the accumulated branch measurement of any node is calculated by using the following steps:

extending L nodes backwards from a node at a previous moment, to obtain all branches of a segmented data stream whose length is L, wherein L is an integer and is greater than 1;
calculating measurements of the branches of the segmented data stream whose length is L, to respectively obtain segmented path measurements of the branches;
selecting a smallest measurement from the segmented path measurements of the branches;
dividing the smallest measurement by L, to obtain an average branch measurement of the node at a current moment; and
adding the accumulated branch measurement of the node at the previous moment to the average branch measurement of the node at the current moment, so as to obtain the accumulated branch measurement of the node at the current moment.

According to a second aspect of the present invention, the present invention provides a decoding device which is applied to an OvXDM system, and comprising:

an accumulated branch measurement calculating module, configured for calculating an accumulated branch measurement of a node; and
a decoding module, configured for performing a decoding operation based on the accumulated branch measurement;
wherein the accumulated branch measurement calculating module comprises:

an extension module, configured for extending L nodes backwards from a node at a previous moment, to obtain all branches of a segmented data stream whose length is L, wherein L is an integer and is greater than 1;
a first calculation module, configured for calculating measurements of the branches of the segmented data stream whose length is L, to respectively obtain segmented path measurements of the branches;
a comparison module, configured for selecting a smallest measurement from the segmented path measurements of the branches;
an average branch measurement calculating module, configured for dividing the smallest measurement by L, to obtain an average branch measurement of the node at a current moment; and
an adder module, configured for adding the accumulated branch measurement of the node at the previous moment to the average branch measurement of the node at the current moment, so as to obtain the accumulated branch measurement of the node at the current moment.

According to a third aspect of the present invention, the present invention provides an OvXDM system, including the aforementioned decoding device to which a segmented path measurement is applied.

Technical effects of the present invention are as follows:

According to the decoding method and the device applied to an OvXDM system, and the OvXDM system, the average branch measurement of the node at the current moment is added to the accumulated branch measurement of the node at the previous moment, to obtain the accumulated branch measurement of the node at the current moment. Therefore, information about the accumulated branch measurement of the current node not only includes measurement information of a branch before the current node, but also includes specific measurement information of a branch after the current node, so that the accumulated branch measurement of the current node has higher reference value, decoding reliability is higher, and a selected decoding path is more accurate and reliable. In addition, calculation of an accumulated branch measurement of a node is improved in the present invention. Therefore, a very accurate decoding result can be obtained without a need of processing all state nodes and extended paths thereof as compared to the conventional solution.

BRIEF DESCRIPTION OF DRAWINGS

FIG. 1 is a schematic flowchart of a decoding method which is applied to an OvXDM system according to an embodiment of the present invention;
FIG. 2 is a schematic flowchart of calculating an accumulated branch measurement of a node in a decoding method applied to an OvXDM system according to an embodiment of the present invention;
FIG. 3 is a schematic structural diagram of a decoding device applied to an OvXDM system according to an embodiment of the present invention;
FIG. 4 is a schematic structural diagram of an accumulated branch measurement calculating module in a decoding device applied to an OvXDM system according to an embodiment of the present invention;
FIG. 5 is a schematic structural diagram of a transmitting end in an OvFDM system in the prior art;
FIG. 6 is a schematic diagram of symbol coding superposition in an OvFDM system in the prior art;
FIG. 7(a) is a block diagram of signal reception of a receiving end in an OvFDM system in the prior art;
FIG. 7(b) is a block diagram of received signal detection of a receiving end in an OvFDM system;
FIG. 8 is a code tree diagram of an input-output relationship in an OvFDM system when a quantity of times of overlapped multiplexing is 3 in the prior art;
FIG. 9 is a node state transition diagram of an OvFDM system when a quantity of times of overlapped multiplexing is 3 in the prior art;
FIG. 10 is a Trellis diagram corresponding to an OvFDM system when a quantity of times of overlapped multiplexing is 3 in the prior art;
FIG. 11 is a schematic diagram of a decoding path in an OvFDM system according to a first embodiment;
FIG. 12 is a schematic structural diagram of a transmitting end in an OvTDM system in the prior art;
FIG. 13 is a schematic diagram of symbol coding superposition in an OvTDM system in the prior art;
FIG. 14(a) is a schematic diagram of a preprocessing unit of a receiving end in an OvTDM system in the prior art;
FIG. 14(b) is a schematic diagram of a sequence detection unit of a receiving end in an OvTDM system;
FIG. 15 is a code tree diagram of an input-output relationship in an OvTDM system when a quantity of times of overlapped multiplexing is 3 in the prior art;
FIG. 16 is a node state transition diagram of an OvTDM system when a quantity of times of overlapped multiplexing is 3 in the prior art;
FIG. 17 is a Trellis diagram corresponding to an OvTDM system when a quantity of times of overlapped multiplexing is 3 in the prior art;
FIG. 18 is a schematic diagram of a decoding path in an OvTDM system according to a second embodiment;
FIG. 19 is a schematic structural diagram of an OvCDM system in the prior art;
FIG. 20 is a schematic structural diagram of an encoder in an OvCDM system in the prior art;
FIG. 21 is a coding matrix of an OvCDM system in the prior art;
FIG. 22 is a schematic structural diagram of a decoder in an OvCDM system in the prior art;
FIG. 23 is a Trellis diagram corresponding to an OvCDM system according to a third embodiment of the present invention; and
FIG. 24 is a schematic diagram of a decoding path in an OvCDM system according to a third embodiment of the present invention.

DESCRIPTION OF EMBODIMENTS

The following further describes the present invention in detail with reference to specific embodiments and accompanying drawings.

The present invention discloses a decoding method which is applied to an OvXDM system. In one embodiment, the OvXDM system is an OvTDM system, an OvFDM system, an OvCDM system, an OvSDM system, or an OvHDM system.

It should be noted that, in the present invention, a measurement indicates a distance between two signals, and is defined as: $d = \sqrt[p]{\left| y_i - x_i \right|^p}, 0 < p < \infty$.

When p is equal to 2, the distance is an Euclidean distance. The Euclidean distance is a real distance between two signals, and can truly reflect a distance between an actual signal and an ideal signal. In the present invention, the Euclidean distance is defined as:

$$d = \sqrt{\sum_i^N (y_i - x_i)^2}.$$

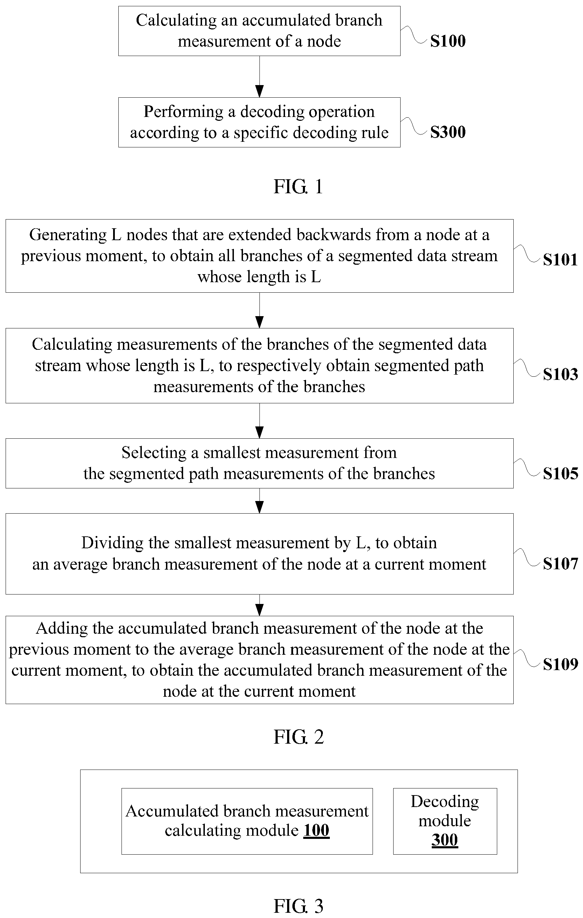

As shown in FIG. 1, in the present invention, the decoding method which is applied an OvXDM system includes steps S100 and S300. The following provides detailed description.

Step S100: calculating an accumulated branch measurement of a node. As shown in FIG. 2, in the embodiment, the accumulated branch measurement of any node is calculated by using steps S101 to S109, that is, step S100 includes steps S101 to S109.

S101: generating L nodes that are extended backwards from a node at a previous moment, to obtain all branches of a segmented data stream whose length is L, wherein L is an integer and is greater than 1. In an M-dimension system, M is an integer and is greater than or equal to 2, M arrival nodes are extended from each node. After generating L nodes that are extended backwards from a node at the previous moment, each arrival node is corresponding to $M^{L-1}$ extended branches, and there are a total of $M^L$ branches for all arrival nodes. In the embodiment, when the OvXDM system is an OvTDM system or an OvFDM system, the branch length L is smaller than or equal to a quantity of times of overlapped multiplexing of the OvXDM system, and decoding performance is best when the branch length L is equal to the quantity of times of overlapped multiplexing of the OvXDM system; or when the OvXDM system is an OvCDM system, the branch length L is smaller than or equal to a quantity of coding branches of the OvXDM system, and decoding performance is best when the branch length L is equal to the quantity of coding branches of the OvXDM system.

S103: calculating measurements of the branches of the segmented data stream whose length is L, to respectively obtain segmented path measurements of the branches. In other words, measurements of $M^{L-1}$ extended branches corresponding to each arrival node of the segmented data stream whose length is L in step S101 are calculated, so as to obtain the segmented path measurements of the branches, there are M arrival nodes. M is a dimensionality of the OvXDM system, and M is an integer and is greater than or equal to 2.

S105: selecting a smallest measurement from the segmented path measurements of the branches. In other words, the segmented path measurements of the

$M^{L-1}$ branches of each arrival node in step S103 are compared, and a smallest measurement is selected from the segmented path measurements of the $M^{L-1}$ branches, and is used as the smallest measurement of the corresponding arrival node. A total of M smallest measurements are obtained, where M is the dimensionality of the OvXDM system, and M is an integer and is greater than or equal to 2.

S107: dividing the smallest measurement by L, to obtain an average branch measurement of the node at a current moment. In other words, the average branch measurement of paths corresponding to each arrival node are obtained and includes a total of M average branch measurements.

S109: adding the accumulated branch measurement of the node at the previous moment to the average branch measurement of the node at the current moment, to obtain the accumulated branch measurement of the node at the current moment. In a conventional decoding solution, the accumulated branch measurement at a current moment is obtained by adding a transient branch measurement of a node at the current moment to the accumulated branch measurement of a node at a previous moment, and the transient branch measurement of the node at the current moment is a measurement of a branch, whose length is 1, from the node at the previous moment to the node at the current moment. Therefore, it can be seen that, in the present invention, the transient branch measurement is replaced by the average branch measurement during calculation. Therefore, the accumulated branch measurement of the current node not only includes branch measurement information before the current node, but also includes branch measurement information after the current node; so that the accumulated branch measurement of the current node has higher reference value, reliability of the decoding operation performed in step S300 is increased, and the selected decoding path is more accurate and reliable. It should be noted that the node at an initial moment does not have the node at a previous moment, therefore the accumulated branch measurement of the node at the initial moment is an average branch measurement of the node at the initial moment. In other words, the accumulated branch measurement of the node at the initial moment is equal to the average branch measurement of the node at the initial moment. In addition, when accumulated branch measurements of nodes at the last several moments are calculated, there may be no branch having a sufficient length after the nodes, that is, even if the node at the final moment is extended, a length of the branch between this nodes may also be smaller than L-1. In this case, there are several solutions. For example, assuming that a length of a data frame is N, when a decoding depth reaches N-L, for the last L symbols, a path corresponding to the selected smallest measurement may be used as an output of the decoding operation.

In a preferred embodiment, in step S109, before adding the accumulated branch measurement of the node at the previous moment to the average branch measurement of the node at the current moment, the accumulated branch measurement of the node at the previous moment is multiplied by a weighting factor. Then the accumulated branch measurement which is multiplied by a weighting factor is added to the accumulated branch measurement of the node at the previous moment, to obtain the accumulated branch measurement of the node at the current moment. An objective of introducing the weighting factor is to make the measurement of a node that is more far away from the node at the current moment have smaller impact on the measurement of the node at the current moment. The weighting factor is determined by a flat fading width of the OvXDM system. In one embodiment, the weighting factor is greater than or equal to 0.9 and is smaller than or equal to 1.

Step S300: performing a decoding operation based on the accumulated branch measurement. In a preferred embodiment, a decoding rule in the step S300 includes: starting from the node at the initial moment, selecting the node with a smallest accumulated branch measurement each time to perform extension. Certainly, the decoding rule in step S300 may alternatively be an existing decoding rule, or a decoding rule that may occur in the future.

If the measurement of the node needs to be used in the decoding rule, an improved accumulated branch measurement of the node in the present invention can be applied to the decoding rule. In the present invention, calculation of the accumulated branch measurement of the node is improved, therefore a very accurate decoding result can be obtained; compared to the conventional solution, there is no need to process all state nodes and extended paths thereof.

For example, as described above, the node with the smallest accumulated branch measurement is selected each time to perform extension, rather than extending all nodes and branches and calculating their measurements each time. Specifically, in one embodiment, M accumulated branch measurements are obtained in step S109, and are corresponding to M arrival nodes. A smallest measurement is selected from the M accumulated branch measurements, and the arrival state node corresponding to the smallest measurement is determined.

Node extension and path selection are performed on the node according to the aforementioned method. The aforementioned steps are repeated, it is started from an $n^{th}$ step, only first $r_n$ arrival nodes and accumulated branch measurements thereof are kept or stored. $r_n$ is determined by a tolerable performance loss of the OvXDM system. Paths having relatively large average branch measurements, and the measurements thereof are all discarded or deleted.

Correspondingly, the present invention further discloses a decoding device which is applied to an OvXDM system. In one embodiment, the OvXDM system is an OvTDM system, an OvFDM system, an OvCDM system, an OvSDM system, or an OvHDM system.

Referring to FIG. 3, the decoding device applied to an OvXDM system in the present invention includes an accumulated branch measurement calculating module 100 and a decoding module 300.

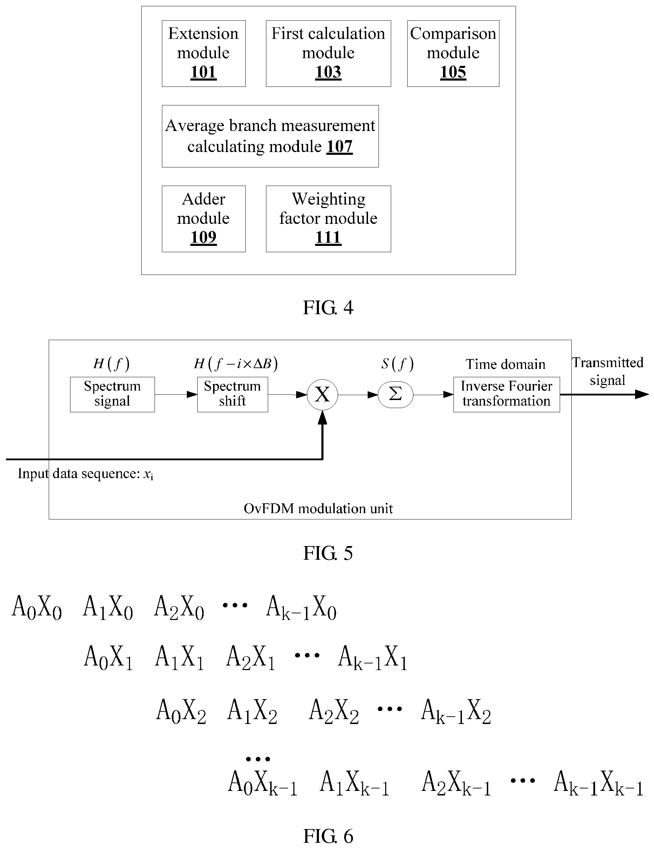

The accumulated branch measurement calculating module 100 is configured for calculating an accumulated branch measurement of a node. In the embodiment, referring to FIG. 4, the accumulated branch measurement calculating module 100 includes an extension module 101, a first calculation module 103, a comparison module 105, an average branch measurement calculating module 107, and an adder module 109. In a preferred embodiment, the accumulated branch measurement calculating module 100 may further include a weighting factor module 111.

The extension module 101 is configured for extending L nodes backwards from a node at a previous moment, to obtain all branches of a segmented data stream whose length is L, wherein L is an integer and is greater than 1. In one embodiment, the branch length L is smaller than or equal to a quantity of times of overlapped multiplexing of the OvXDM system when the OvXDM system is the OvTDM system or the OvFDM system; or the branch length L is smaller than or equal to a quantity of coding branches of the OvXDM system when the OvXDM system is the OvCDM system.

The first calculation module 103 is configured for calculating measurements of the branches of the segmented data stream whose length is L, to respectively obtain segmented path measurements of the branches.

The comparison module 105 is configured for selecting a smallest measurement from the segmented path measurements of the branches.

The average branch measurement calculating module 107 is configured for dividing the smallest measurement by L, to obtain an average branch measurement of the node at a current moment.

The adder module 109 is configured for adding the accumulated branch measurement of the node at the previous moment to the average branch measurement of the node at the current moment, so as to obtain the accumulated branch measurement of the node at the current moment.

The weighting factor module 111 is configured for multiplying the accumulated branch measurement of the node at the previous moment by a weighting factor before adding the accumulated branch measurement of the node at the previous moment to the average branch measurement of the node at the current moment.

The weighting factor is determined by a flat fading width of the OvXDM system. In one embodiment, the weighting factor is greater than or equal to 0.9 and is smaller than or equal to 1. An objective of introducing the weighting factor is to make the measurement of a node that is more far away from the node at the current moment has smaller impact on the measurement of the node at the current moment.

The decoding module 300 is configured for performing an decoding operation based on the accumulated branch measurement. In one embodiment, the decoding module 300 includes a smallest accumulated branch measurement extending module. The smallest accumulated branch measurement extending module is configured for: starting from a node at an initial moment, selecting a node, having a smallest accumulated branch measurement, from nodes which are extended from the node at the initial moment each time.

The present invention further discloses an OvXDM system. The OvXDM system includes the decoding device to which the segmented path measurement is applied in the present invention. In one embodiment, the OvXDM system disclosed in the present invention is an OvTDM system, an OvFDM system, an OvCDM system, an OvSDM system, or an OvHDM system.

The following further describes the present invention by using several embodiments.

Embodiment 1

This embodiment is described by using an OvFDM system as an example.

FIG. 5 shows a transmitting end of an OvFDM system in the prior art. The transmitting end firstly encodes a frequency-domain signal according to a certain rule; then converts the frequency-domain signal into a time-domain signal, that is, inverse Fourier transformation is performed; and finally sends out the signal. Specifically, an initial envelope waveform is firstly generated based on design parameters. Secondly, the initial envelope waveform is shifted by a predetermined spectrum interval in the frequency domain based on a quantity of times of overlapped multiplexing, to obtain sub-carrier envelope waveforms. Thirdly, input data sequences are respectively multiplied by corresponding sub-carrier envelope waveforms, to obtain modulated envelope waveforms of the sub-carriers. Fourthly, the modulated envelope waveforms of the sub-carriers are superimposed in the frequency domain, to obtain a composite modulated envelope waveform in the frequency domain. Finally, the composite modulated envelope waveform in the frequency domain is converted into a composite modulated envelope waveform in the time domain, and the composite modulated envelope waveform is send out. The spectrum interval is a sub-carrier spectrum interval $\Delta B$. The sub-carrier spectrum interval $\Delta B$ is equal to B/K, where B is a bandwidth of the initial envelope waveform, and K is the quantity of times of overlapped multiplexing. FIG. 6 is a schematic diagram showing the aforementioned process of superimposing the modulated envelope waveforms of the sub-carriers is reflected to symbol coding in the frequency domain.

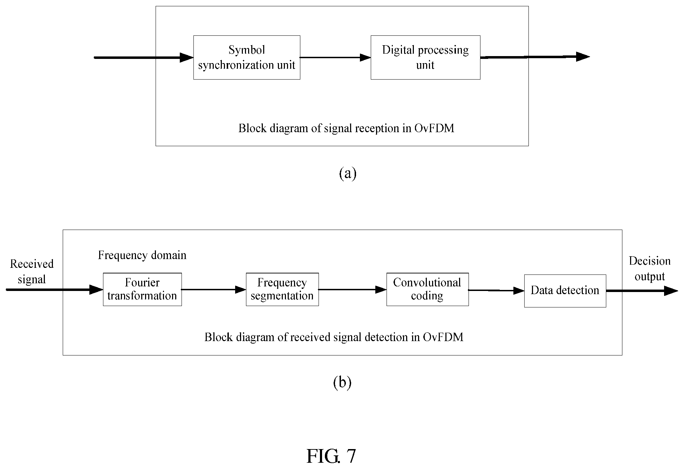

FIG. 7 shows a receiving end of the OvFDM system in the prior art. A signal received by the receiving end by using an antenna is a time-domain signal. In order to decode the received signal, the receiving end firstly needs to convert the time-domain signal into a frequency-domain signal, that is, Fourier transformation needs to be performed before processing. Specifically, symbol synchronization is firstly implemented on the received signal in the time domain. Secondly, the received signal is sampled and quantized in each of the symbolic time intervals, so that the received signal is converted to a received digital signal sequence. The time-domain signal is converted into the frequency-domain signal, and then the frequency-domain signal is segmented by a spectrum interval $\Delta B$, so as to actually form segmented spectrums of the received signal. Thirdly, the segmented spectrums of the received signal are respectively corresponding to transmitted data symbol sequences. Finally, the data symbol sequences are detected based on the above corresponding relationship.

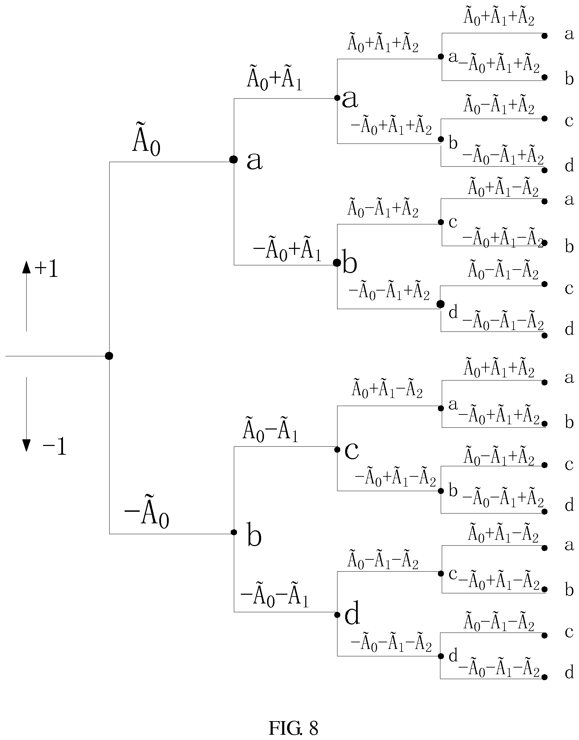

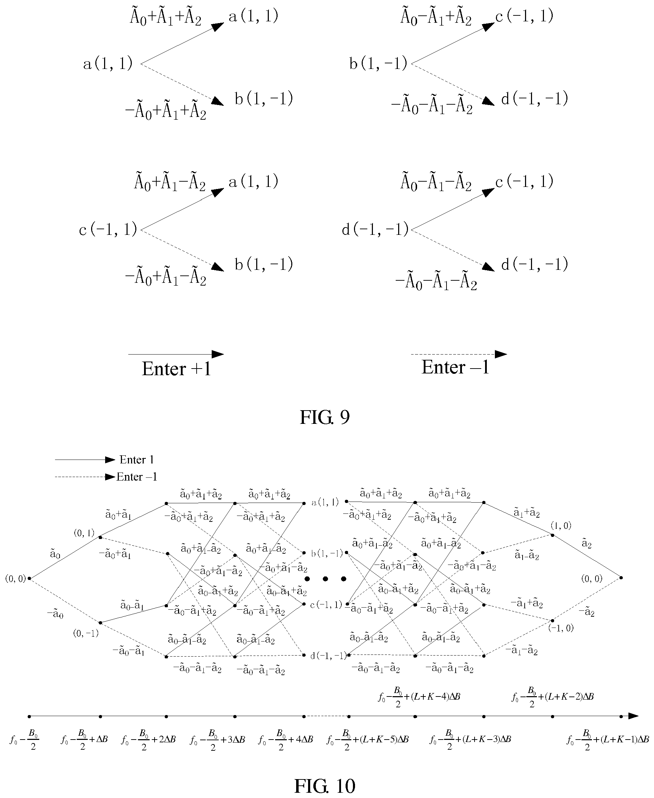

FIG. 8, FIG. 9, and FIG. 10 relate to a specific decoding process. FIG. 8 is a code tree diagram of an input-output relationship in the OvXDM system when the quantity K of times of overlapped multiplexing is 3. FIG. 9 is a state transition diagram corresponding to a node in FIG. 8. FIG. 10 is a Trellis diagram corresponding to the OvXDM system when the quantity K of times of overlapped multiplexing is 3. A branch extension process of the node can be clearly seen from the Trellis diagram corresponding to the OvXDM system. It should be noted that both the inverse Fourier transformation and the Fourier transformation in the OvFDM system are related to setting of a quantity of sampling points. The quantity of sampling points of the inverse Fourier transformation and the Fourier transformation are consistent, and the quantity is $2^n$, where n is a positive integer.

Because the overlapped multiplexing modulation and coding method are used in the OvFDM system, system symbols are associated with each other in the OvFDM system. However, this is not fully utilized in a conventional decoding method.

The present invention improves the OvFDM system in the prior art by the following: a method for calculating an accumulated branch measurement of the node in the system decoding process is improved, and the transient branch measurement is replaced by the average branch measurement. Therefore, the accumulated branch measurement of the current node not only includes branch measurement information before the current node, but also includes branch measurement information after the current node; so that the accumulated branch measurement of the current node has higher reference value, and the selected decoding path is more accurate and reliable.

In addition, Viterbi decoding is usually used as a decoding rule of a conventional OvFDM system. In the OvFDM system, each node in a Trellis diagram needs to be extended in the decoding process. Therefore, a quantity of nodes determines a decoding complexity. For a system in which a quantity of times of overlapping is K and whose modulation dimensionality is M (M is an integer and is greater than or equal to 2), a quantity of nodes that are in the stable state in a Trellis diagram corresponding to the OvFDM system is $M^{K-1}$, and therefore the decoding complexity is exponentially increased with the quantity K of times of overlapping. However, in the OvFDM system, spectral efficiency of the OvFDM system is 2K/symbols, and therefore the spectral efficiency is higher if the quantity K of times of overlapping is greater. Therefore, on one hand, because of a requirement for increasing the spectral efficiency, it is better if the quantity K of times of overlapping is greater; on the other hand, because of a requirement for reducing the decoding complexity, it is better if the quantity K of times of overlapping is smaller. Particularly, when the quantity K of times of overlapping is increased to a specific value, for example K is greater than 8, the decoding complexity increases rapidly. An existing decoding method cannot meet a real-time decoding requirement, and a requirement for the spectral efficiency and a requirement for the decoding complexity and the decoding efficiency are contradictory to each other. To solve this problem, when the accumulated branch measurement is calculated in this embodiment, the branch length L is configured to be equal to the quantity K of times of overlapped multiplexing, and an effect that is the same as the complex Viterbi algorithm can be achieved. In addition, according to a decoding rule used in the present invention, it is started from the node at the initial moment, the node is selected with a smallest accumulated branch measurement each time to perform extension, compared to the Viterbi algorithm, there is no need to process all state nodes and extended paths thereof. Therefore, the decoding complexity can be significantly reduced, and the decoding efficiency can be increased. Different from the conventional decoding solution, in the present invention, the decoding complexity does not rapidly increase as the quantity K of times of overlapped multiplexing increases, and a contradiction between the requirement for the spectral efficiency and the requirement for the decoding complexity and the decoding efficiency is solved.

The following provides detailed description.

It is assumed that a symbolic data stream received by the receiving end of the OvXDM system is $y_0$, $y_1$, ..., $y_{L-1}$, $y_L$, ..., $y_N$; and the symbolic data sent by the transmitting end of the OvXDM system is $u_0$, $u_1$, ..., $u_{L-1}$, $u_L$, ..., $u_N$; where L is the segmented path length, namely, the extended branch length, N is a frame data length, the quantity of times of overlapped multiplexing is K, and L is smaller than or equal to K. When L is equal to K, an optimal algorithm is achieved, and performance of the OvXDM system is fully consistent with that of the Viterbi algorithm. Binary input data {+1, -1} is used as an example, that is, M = 2. During node transition in the Trellis diagram corresponding to the OvXDM system, two nodes are extended backwards from each node. An extended upper node indicates an arrival node when data +1 is newly entered, and an extended lower node indicates an arrival node when data -1 is newly entered. The nodes are respectively referred to as an original node, for example a first node, a second node, etc., based on locations of the nodes in the Trellis diagram. A connection line between adjacent nodes is a branch, and a complete broken line obtained by connecting branches is a final decoding path.

(1) Calculating the measurement of each extended branch whose length is L.

A formula is $D_{i,j}^L = \sum_{n'=i}^{i+L-1} d_{n'}$, $j = 0 \sim 2^{L-1}$.

L is a segmented path length, and L ≤ K. When K is very large, it is better if L is larger under the premise of tolerating the calculation complexity. System symbols are associated with each other in the OvFDM system. Therefore, by using the decoding method to which a segmented path measurement is applied in the present invention, reference between the measurements is enhanced, and a selected decoding path is more reliable.

A segmented data stream starting from a node i in the Trellis diagram and having a length of L is $u_i$, $u_{i+1}$, ..., $u_{i+L}$, where i indicates an index of a frame symbol sequence. There are two arrival nodes from $u_i$ to $u_{i+1}$: an upper node $u_i$=+1 and a lower node $u_i$=-1. There are a total of $2^{L-1}$ ideal sequence arrangements from $u_{i+1}$ to $u_{i+L}$, that is, there are a total of $2^{L-1}$ ideal sequence arranged for an upper-node segmented data stream, $u_i$, $u_{i+1}$, ..., $u_{i+L}$, of $u_i$=+1, and there are also a total of $2^{L-1}$ ideal sequence arranged for a lower-node segmented data stream, $u_i$, $u_{i+1}$, ..., $u_{i+L}$, of $u_i$=-1.

Segmented path measurements $D_{i_+,j}^L$, $j = 0 \sim 2^{L-1}$ between the received symbolic data stream $y_i$, $y_{i+1}$, ..., $y_{i+L}$ and $2^{L-1}$ sequences of the upper node is calculated, and segmented path measurements $D_{i_-,j}^L$, $j = 0 \sim 2^{L-1}$ between the received symbolic data stream $y_i$, $y_{i+1}$, ..., $y_{i+L}$ and $2^{L-1}$ sequences of the lower node is also calculated.

(2) Calculating an average branch measurement.

An average branch measurement formula is

$$\overline{d}_i^r = \frac{1}{L} * \sum_{n'=i}^{i+L-1} d_{i'} = \frac{1}{L} * D_{i,\min}^L .$$

The $2^{L-1}$ branches obtained in (1) are compared, to obtain a path corresponding to a smallest measurement; the length of each branch is L. Index j of the smallest measurement corresponding to the upper node is $\min_+$, index j of the smallest measurement corresponding to the lower node is min. Then an averaging operation is performed for the path, to obtain an average branch measurement. The average branch measurement of the upper node is $\overline{d}_{i_+}^{r} = D_{i_+,\min_+}^{L} / L$, and the average branch measurement of the lower node is

$$\overline{d}_{i_-}^{r} = D_{i_-,\min_-}^{L} / L.$$

(3) Calculating an accumulated branch measurement.

An accumulated branch measurement formula is $\overline{d}_{i}^{e} = \overline{d}_{i}^{r} + \alpha * \overline{d}_{i-1}^{e}$.

$\alpha$ indicates a weighting factor, and $\alpha$ is greater than or equal to 0.9 and is smaller than or equal to 1. $\alpha$ is determined by a flat fading width of the OvXDM system. As a decoding depth increases, the measurement of a node that is more far away from the current node has smaller impact on the measurement of the current node.

$\overline{d}_{i}^{e}$ indicates an accumulated branch measurement of the current node. $\overline{d}_{i}^{r}$ indicates an average branch measurement of the current node. $\overline{d}_{i-1}^{e}$ indicates an accumulated branch measurement of a previous node of the current node.

The average branch measurements of the upper node and the lower node of $u_i$ are obtained in (2). An accumulated branch measurement of $u_{i-1}$ is multiplied by a corresponding weighting factor, then the accumulated branch measurement is respectively added to the average branch measurements of the upper node and the lower node, to obtain the accumulated branch measurement of $u_i$=+1 and the accumulated branch measurement of $u_i$=-1.

When i = 0, the node is the original point, namely, the node at an initial moment. In this case, there is only an average branch measurement, and there is no accumulative measurement of a previous node. During calculation, mathematically, the accumulated branch measurement of the original point is equal to the average branch measurement of the original point.

(4) Decoding rule

The accumulated branch measurements of the upper node and the lower node of $u_i$ are obtained in (3). The measurements are compared, and a node with a smaller measurement is selected and extended. Likewise, a segmented data stream whose length is L is selected from the current node, and node measurement selection and extension are performed on the node according to the manner in (1) to (3). One arrival node is added after each extension.

In one embodiment, after a specific node is extended, only first $r_n$ arrival nodes and accumulated branch measurements thereof may be kept or stored. $r_n$ is determined by a tolerable performance loss of the OvXDM system. Paths having relatively large average branch measurements, and the measurements thereof are all discarded or deleted.

In one embodiment, when a signal-to-noise ratio is very large, extension may be directly performed forwards from a segmented path provided that a measurement of the segmented path is far smaller than that of other segmented paths, so that decoding complexity is further and significantly reduced.

(5) Decision output

Remaining data frame symbols are selected and extended according to the manner in (1) to (4), until the data frame ends. Decision output is performed on a path of an arrival node with a smallest average branch measurement, and this path is a final decoding result.

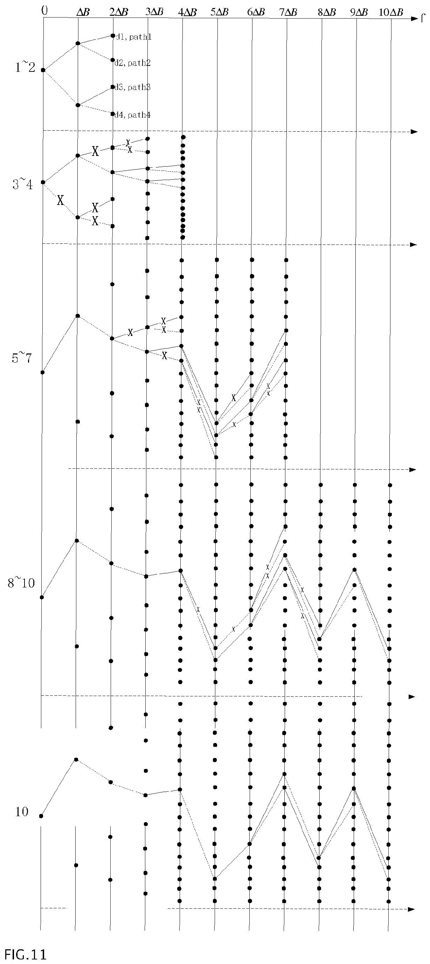

In the aforementioned process, a two-dimension OvFDM system is used as an example, and a rectangular multiplexing window H={1 1 1 1} is used in the OvXDM system. It should be noted that the decoding method to which a segmented path measurement is applied in the present invention may also be applied to the OvFDM system in which various multiplexing window functions are used for modulating. Assuming that the quantity K of times of overlapping is 5, there are $2^{K-1}$=16 nodes after the Trellis diagram corresponding to the OvXDM system is fully unfolded. In this case, the segmented path length L is 3, and $r_n$ is 4. A transmitted code sequence is $x_i$={+1, -1, -1, +1, -1, +1 +1, -1, +1, -1}. After waveform multiplexing is performed in the OvFDM system, an obtained receiving sequence is $y_i$={+1, 0, -1, 0, -1, -1, +1, +1, +1, +1}. The received sequence $y_i$ is decoded according to the decoding method to which a segmented path measurement is applied in this embodiment; a decoding path thereof is referred to FIG. 11. A correct decoding result is finally obtained.

Embodiment 2

This embodiment is described by using an OvTDM system as an example.

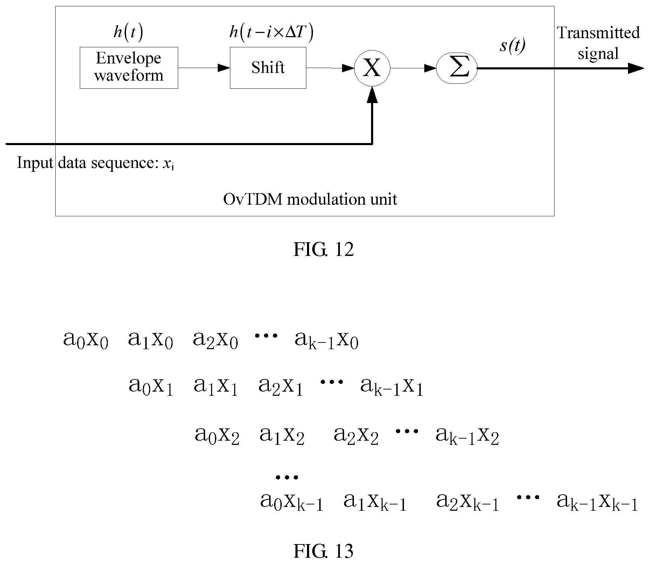

FIG. 12 shows a transmitting end of the OvTDM system in the prior art. Firstly, an initial envelope waveform is generated in the time domain based on design parameters. Secondly, the initial envelope waveform is shifted by a predetermined time interval in the time domain based on a quantity of times of overlapped multiplexing, to obtain offset envelope waveforms at various moments. Thirdly, input data sequences are multiplied by the offset envelope waveforms at various moments, to obtain modulated envelope waveforms at various moments. Fourthly, the modulated envelope waveforms at various moments are superimposed in the time domain, to obtain a composite modulated envelope waveform in the time domain for transmitting. The time interval is $\Delta t$, and $\Delta t$ is equal to T/K, where T is time-domain width of the initial envelope waveform, and K is the quantity of times of overlapped multiplexing. FIG. 13 is a schematic diagram showing the aforementioned process of superimposing the modulated envelope waveforms of the subcarriers that is reflected to symbol coding in the time domain.

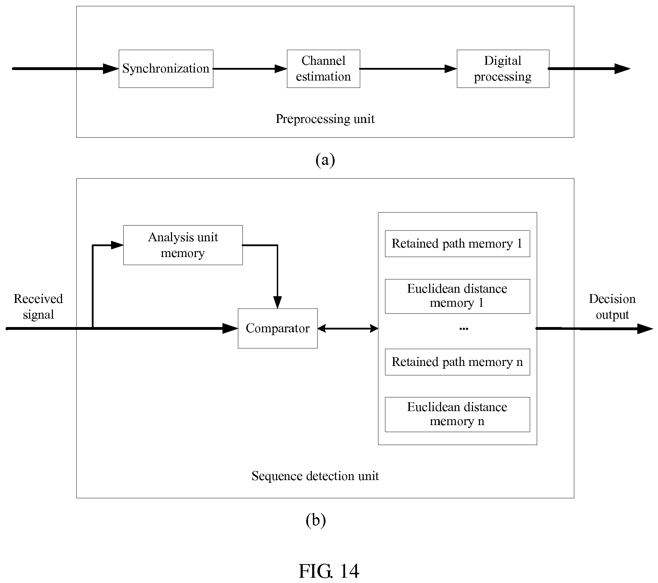

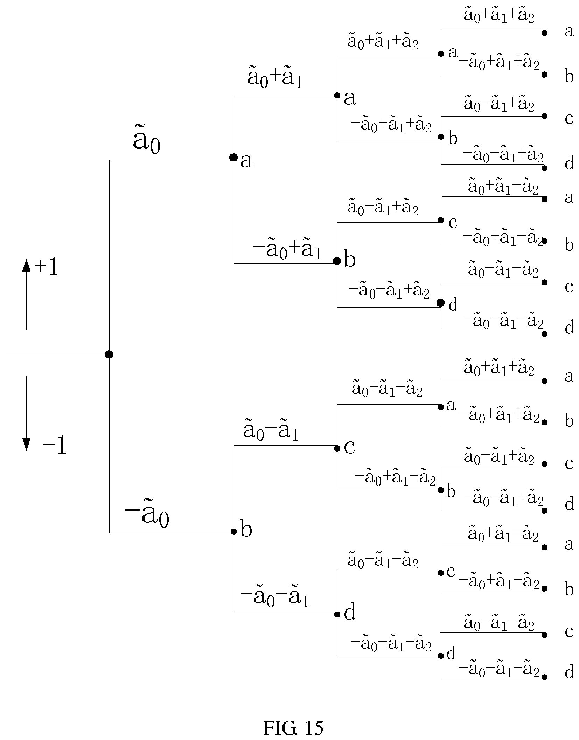

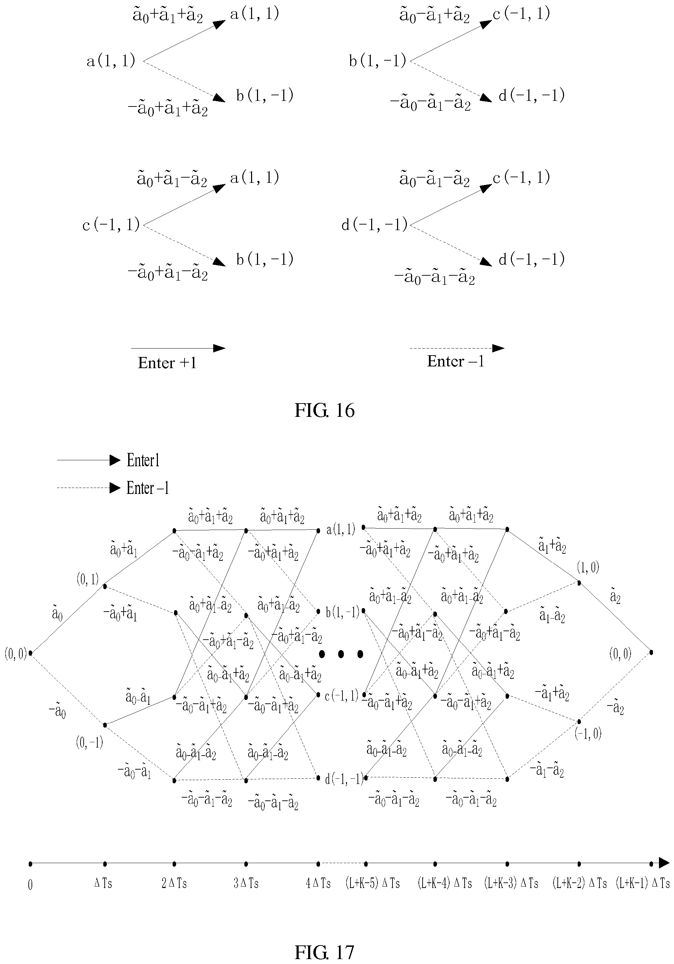

FIG. 14 shows a receiving end of the OvTDM system in the prior art. The receiving end generates a received digital signal sequence for a received signal in each frame, and detects the received digital signal sequence, to obtain a judgment on a modulated data; all symbols within a length of the frame are modulated to generate the modulated data. Specifically, the received signal is firstly synchronized, the synchronization includes carrier synchronization, frame synchronization, symbol time synchronization, and the like. Secondly, digital processing is performed on the received signal in each frame according to a sampling theorem. Thirdly, a received waveform is segmented based on a waveform transmission time interval, and then the segmented waveform is decoded based on a specific decoding algorithm. FIG. 15, FIG. 16, and FIG. 17 relate to a specific decoding process. FIG. 15 is a code tree diagram of an input-output relationship in the OvTDM system when the quantity K of times of overlapped multiplexing is 3. FIG. 16 is a state transition diagram corresponding to the node in FIG. 15. FIG. 17 is a Trellis diagram corresponding to the OvTDM system when the quantity K of times of overlapped multiplexing is 3. A branch extension process of the node can be clearly seen from the Trellis diagram corresponding to the OvTDM system.

Because the overlapped multiplexing modulation and the coding method are used in the OvTDM system, system symbols are associated with each other in the OvTDM system. However, this is not fully utilized in a conventional decoding method.

The present invention improves the OvTDM system in the prior art by the following: a method for calculating an accumulated branch measurement of a node in a system decoding process is improved, and an average branch measurement is used to replace a transient branch measurement. Therefore, the accumulated branch measurement of the current node not only includes branch measurement information before the current node, but also includes branch measurement information after the current node; so that the accumulated branch measurement of the current node has higher reference value, and the selected decoding path is more accurate and reliable.

In addition, Viterbi decoding is usually used as a decoding rule of a conventional OvTDM system. In the OvTDM system, each node in a Trellis diagram needs to be extended in the decoding process. Therefore, a quantity of nodes determines a decoding complexity. For a system in which a quantity of times of overlapping is K and whose modulation dimensionality is M (M is an integer and is greater than or equal to 2), a quantity of nodes that are in the stable state in a Trellis diagram corresponding to the OvTDM system is $M^{K-1}$, and therefore the decoding complexity is exponentially increased with the quantity K of times of overlapping. However, in the OvTDM system, spectral efficiency of the OvTDM system is 2K/symbol, and therefore the spectral efficiency is higher if the quantity K of times of overlapping is greater. Therefore, on one hand, because of a requirement for increasing the spectral efficiency, it is better if the quantity K of times of overlapping is greater; on the other hand, because of a requirement for reducing the decoding complexity, it is better if the quantity K of times of overlapping is smaller. Particularly, when the quantity K of times of overlapping is increased to a specific value, for example K is greater than 8, the decoding complexity increases rapidly. An existing decoding method cannot meet a real-time decoding requirement, and a requirement for the spectral efficiency and a requirement for the decoding complexity and the decoding efficiency are contradictory to each other. To solve this problem, when the accumulated branch measurement is calculated in this embodiment, the branch length L is configured to be equal to the quantity K of times of overlapped multiplexing, and an effect that is the same as the complex Viterbi algorithm can be achieved. In addition, according to a decoding rule used in the present invention, it is started from the node at the initial moment, the node is selected with a smallest accumulated branch measurement each time to perform extension, compared to the Viterbi algorithm, there is no need to process all state nodes and extended paths thereof. Therefore, the decoding complexity can be significantly reduced, and the decoding efficiency can be increased. Different from the conventional decoding solution, in the present invention, the decoding complexity does not rapidly increase as the quantity K of times of overlapped multiplexing increases, and a contradiction between the requirement for the spectral efficiency and the requirement for the decoding complexity and the decoding efficiency is solved.

The following provides detailed description.

It is assumed that a symbolic data stream received by the receiving end of the OvTDM system is $y_0$, $y_1$, ..., $y_{L-1}$, $y_L$, ..., $y_N$; and the symbolic data sent by the transmitting end of the OvTDM system is $u_0$, $u_1$, ..., $u_{L-1}$, $u_L$, ..., $u_N$; where L is the segmented path length, namely, the extended branch length, N is a frame data length, the quantity of times of overlapped multiplexing is K, and L is smaller than or equal to K. When L is equal to K, an optimal algorithm is achieved, and performance of the OvTDM system is fully consistent with that of the Viterbi algorithm. Binary input data {+1, -1} is used as an example, during node transition in the Trellis diagram corresponding to the OvTDM system, two nodes are extended backwards from each node. An extended upper node indicates an arrival node when data +1 is newly entered, and an extended lower node indicates an arrival node when data -1 is newly entered. Each of the nodes is referred to as an original node, for example a first node, a second node, etc., based on locations of the nodes in the Trellis diagram. A connection line between adjacent nodes is a branch, and a complete broken line obtained by connecting branches is a final decoding path.

(1) Calculating a measurement of each extended branch whose length is L.

A formula is $D_{i,j}^{L} = \sum_{n'=i}^{i+L-1} d_{n'}, j = 0 \sim 2^{L-1}$.

L is a segmented path length, and L ≤ K. When K is very large, it is better if L is larger under the condition of tolerating the calculation complexity. System symbols are associated with each other in the OvTDM system. Therefore, by using the decoding method to which a segmented path measurement is applied in the present invention, reference between the measurements is enhanced, and a selected decoding path is more reliable.

A segmented data stream starting from a node i in the Trellis diagram and having a length of L is $u_i$, $u_{i+1}$, ..., $u_{i+L}$, where i indicates an index of a frame symbol sequence. There are two arrival nodes from $u_i$ to $u_{i+1}$: an upper node $u_i$=+1 and a lower node $u_i$=-1. There are a total of $2^{L-1}$ ideal sequence arrangements from $u_{i+1}$ to $u_{i+L}$, that is, there are a total of $2^{L-1}$ ideal sequence arranged for an upper-node segmented data stream, $u_i$, $u_{i+1}$, ..., $u_{i+L}$, of $u_i$=+1, and there are also a total of $2^{L-1}$ ideal sequence arranged for a lower-node segmented data stream, $u_i$, $u_{i+1}$, ..., $u_{i+L}$, of $u_i$=-1.

Segmented path measurements $D_{i_+,j}^{L}$, $j = 0 \sim 2^{L-1}$ between the received symbolic data stream $y_i$, $y_{i+1}$, ..., $y_{i+L}$ and $2^{L-1}$ sequences of the upper node is calculated, and segmented path measurements $D_{i_-,j}^{L}$, $j = 0 \sim 2^{L-1}$ between the received symbolic data stream $y_i$, $y_{i+1}$, ..., $y_{i+L}$ and $2^{L-1}$ sequences of the lower node is also calculated.

(2) Calculating an average branch measurement.

An average branch measurement formula is

$$\overline{d}_{i}^{r} = \frac{1}{L} * \sum_{n'=i}^{i+L-1} d_{i'} = \frac{1}{L} * D_{i,\min}^{L}.$$

The $2^{L-1}$ branches obtained in (1) are compared, to obtain a path corresponding to a smallest measurement; the length of each branch is L. Index j of the smallest measurement corresponding to the upper node is min$_+$, index j of the smallest measurement corresponding to the lower node is min$_-$. Then an averaging operation is performed for the path, to obtain an average branch measurement. The average branch measurement of the upper node is $\overline{d}_{i_+}^{r} = D_{i_+,\min_+}^{L} / L$, and the average branch measurement of the lower node is

$$\overline{d}_{i_-}^{r} = D_{i_-,\min_-}^{L} / L.$$

(3) Calculating an accumulated branch measurement.

An accumulated branch measurement formula is $\overline{d}_{i}^{e} = \overline{d}_{i}^{r} + \alpha * \overline{d}_{i-1}^{e}$.

$\alpha$ indicates a weighting factor, and $\alpha$ is greater than or equal to 0.9 and is smaller than or equal to 1. $\alpha$ is determined by a flat fading width of the OvTDM system. As a decoding depth increases, the measurement of a node that is more far away from the current node has smaller impact on the measurement of the current node.

$\overline{d}_{i}^{e}$ indicates an accumulated branch measurement of the current node. $\overline{d}_{i}^{r}$ indicates an average branch measurement of the current node. $\overline{d}_{i-1}^{e}$ indicates an accumulated branch measurement of a previous node of the current node.

The average branch measurements of the upper node and the lower node of $u_i$ are obtained in (2). An accumulated branch measurement of $u_{i-1}$ is multiplied by a corresponding weighting factor, then the accumulated branch measurement is respectively added to the average branch measurements of the upper node and the lower node, to obtain the accumulated branch measurement of $u_i$=+1 and the accumulated branch measurement of $u_i$=-1.

When i = 0, the node is the original point, namely, the node at an initial moment. In this case, there is only an average branch measurement, and there is no accumulative measurement of a previous node. During calculation, mathematically, the accumulated branch measurement of the original point is equal to the average branch measurement of the original point.

(4) Decoding rule

The accumulated branch measurements of the upper node and the lower node of $u_i$ are obtained in (3). The measurements are compared, and a node with a smaller measurement is selected and extended. Likewise, a segmented data stream whose length is L is selected from the current node, and node measurement selection and extension are performed on the node according to the manner in (1) to (3). One arrival node is added after each extension.

In one embodiment, after a specific node is extended, only first $r_n$ arrival nodes and accumulated branch measurements thereof may be kept or stored. $r_n$ is determined by a tolerable performance loss of the OvTDM system. Paths having relatively large average branch measurements, and the measurements thereof are all discarded or deleted.

In one embodiment, when a signal-to-noise ratio is very large, extension may be directly performed forwards from a segmented path provided that a measurement of the segmented path is far smaller than that of other segmented paths, so that decoding complexity is further and significantly reduced.

(5) Decision output

Remaining data frame symbols are selected and extended according to the manner in (1) to (4), until the data frame ends. Decision output is performed on a path of an arrival node with a smallest average branch measurement, and this path is a final decoding result.

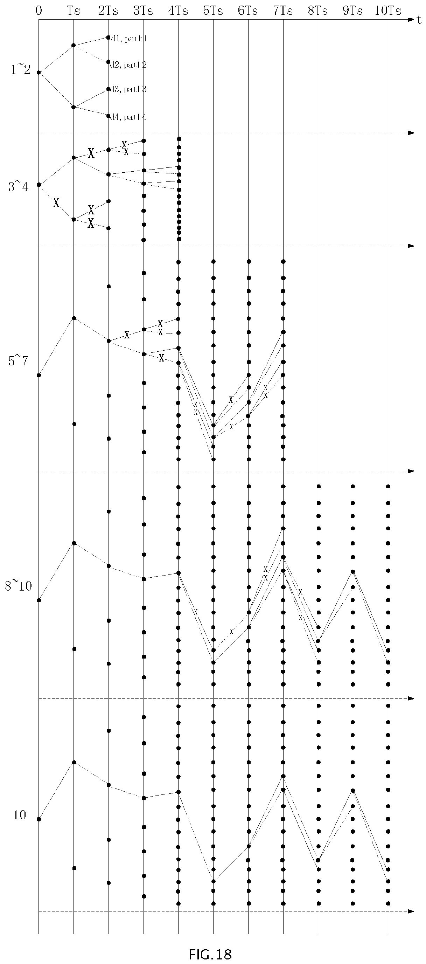

In the aforementioned process, a two-dimension OvTDM system is used as an example, and a rectangular multiplexing window H={1 1 1 1 1} is used in the OvTDM system. It should be noted that the decoding method to which a segmented path measurement is applied in the present invention may also be applied to the OvTDM system in which various multiplexing window functions are used for modulating. Assuming that the quantity K of times of overlapping is 5, there are $2^{K-1}$=16 nodes after the Trellis diagram corresponding to the OvTDM system is fully unfolded. In this case, the segmented path length L is 3, and $r_n$ is 4. A transmitted code sequence is $x_i$={+1, -1, -1, +1, -1, +1 +1, -1, +1, -1}. After waveform multiplexing is performed in the OvTDM system, an obtained receiving sequence is $y_i$={+1, 0, -1, 0, -1, -1, +1, +1, +1, +1}. The received sequence $y_i$ is decoded according to the decoding method to which a segmented path measurement is applied in this embodiment; a decoding path thereof is referred to FIG. 18. A correct decoding result is finally obtained.

Embodiment 3

This embodiment is described by using an OvCDM system as an example.

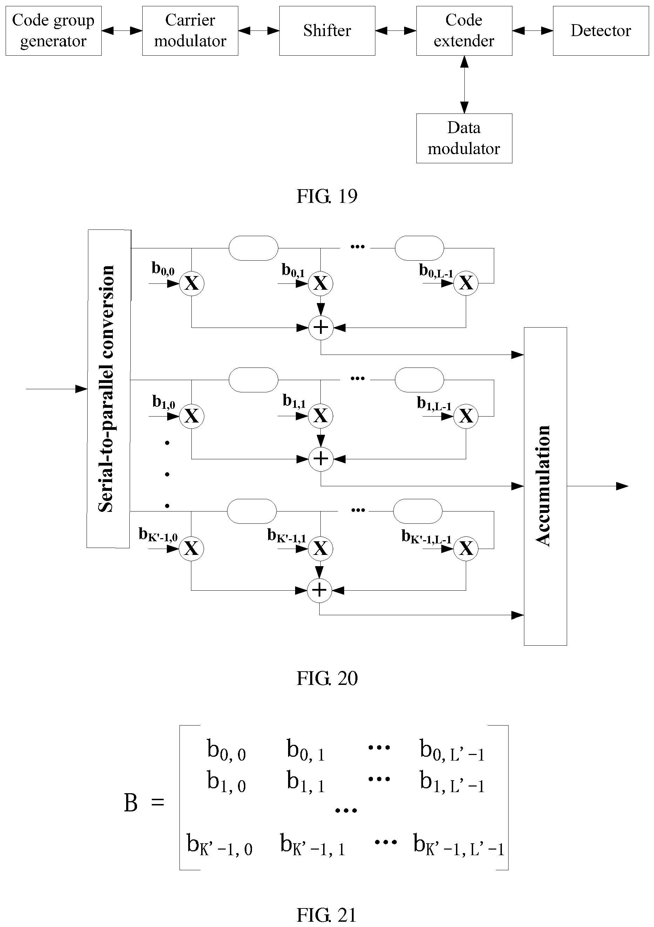

The key of overlapped code division multiplexing of the OvCDM system is overlapping and multiplexing, with an objective to improve spectral efficiency of a communication system. In the OvCDM system, a convolutional coding coefficient is applied to a generalized convolutional coding model in a complex field; a constraint relationship is generated through symbol overlapping, main parameters include a quantity K' of coding branches and a coding constraint length L'. A structural diagram of the OvCDM system is shown in FIG. 19. A structure of a corresponding encoder is shown in FIG. 20. The key of the OvCDM system is a coding matrix, namely, a convolutional extension coefficient. The coding matrix needs to meet a linear relationship. In this case, an input sequence is corresponding to an output sequence. Therefore, theoretically, decoding can be performed without code errors. Usually, matrix with relatively large measurements are searched by using a computer and are used as coding matrix. An arrangement of the coding matrix of the OvCDM system is shown in FIG. 21.

Firstly, a coding process of a conventional OvCDM system is provided.

(1) converting the data to be sent into K' sub data streams through serial-to-parallel conversion. An $i^{th}$ data stream is marked as $u_i$=$u_{i,0}u_{i,1}u_{i,2}$..., for example, when K'=2, $u_0$=$u_{0,0}u_{0,1}u_{0,2}$..., and $u_1$=$u_{1,0}u_{1,1}u_{1,2}$...;

(2) sending each data stream to a shift register to perform weighted superimposition. A weighting coefficient of the $i^{th}$ data stream is $b_i$=$b_{i,0}b_{i,1}b_{i,2}$..., which is a complex vector.

(3) performing an adder operation on the signals for outputting. The final output of the OvCDM encoder is c=c0c1c2..., where $c = \sum_i u_i * b_i$ .

A code rate of OvCDM is $r_{OVCDM} = \dfrac{kn}{n+l-1}$, where n is a length of a sub data stream. When n is very large, a code rate loss caused by tailing of a shift register can be ignored, and therefore $r_{OVCDM} \approx k$.

Conventionally, a code rate of the binary convolutional coding model is usually smaller than 1, resulting in a loss of spectral efficiency. However, in the OvCDM system, a code rate of convolutional coding in the complex domain is equal to 1. Single-path convolutional coding extension does not result in a loss of spectral efficiency, but increases an additional coding gain.

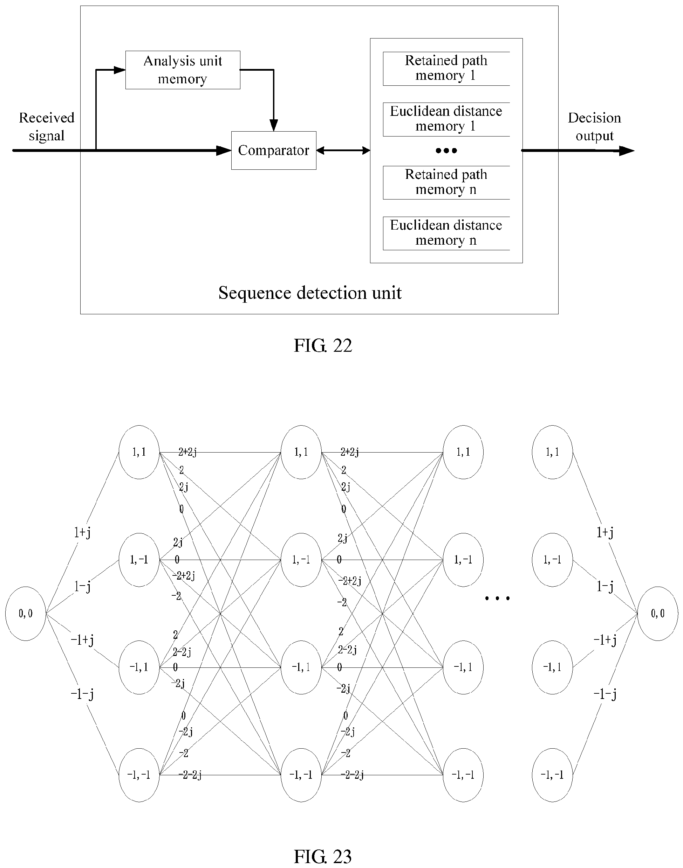

After receiving a signal, the receiving end firstly performs synchronization, channel estimation, and digital processing on the signal, and then performs fast decoding on the processed data. A key of a decoding algorithm is to calculate the measurements of the received signal and an ideal state, decide a best decoding path by using a path memory and based on the measurement, and obtain a final detection sequence. A block diagram of a sequence detection process is shown in FIG. 22.

Because the modulation and coding method used in the OvCDM system, system symbols in the OvCDM system are associated with each other. However, this is not fully utilized in a conventional decoding method. The present invention improves the OvCDM system in the prior art by the following: a method for calculating an accumulated branch measurement of the node in the system decoding process is improved, and an average branch measurement is used to replace a transient branch measurement. Therefore, the accumulated branch measurement of the current node not only includes branch measurement information before the current node, but also includes branch measurement information after the current node; so that the accumulated branch measurement of the current node has higher reference value, and the selected decoding path is more accurate and reliable.

In addition, Viterbi decoding is usually used according to a decoding rule of a conventional OvCDM system. In the OvCDM system, a quantity of coding branches is K', modulation dimensionality of the OvCDM system is M, a quantity of nodes that are in the stable state in a Trellis diagram corresponding to the OvCDM system is $M^{K'-1}$, and therefore decoding complexity increases exponentially with the quantity K' of coding branches. In the OvCDM system, the quantity K' of coding branches needs to be as large as possible, to improve the spectral efficiency. However, the decoding complexity also rapidly increases as K' increases. Therefore, a requirement for the spectral efficiency and a requirement for the decoding complexity and decoding efficiency are contradictory to each other. To solve this problem, when the accumulated branch measurement is calculated in this embodiment, the branch length L is configured to be equal to the quantity K' of coding branches, and an effect that is the same as the complex Viterbi algorithm can be achieved.

In addition, according to a decoding rule used in the present invention, only a node with a smallest accumulated branch measurement needs to be selected, starting from the node at an initial moment, the node is selected with a smallest accumulated branch measurement each time to perform extension, there is no need to process all state nodes and extended paths thereof as compared to the Viterbi algorithm. Therefore, the decoding complexity can be significantly reduced, and the decoding efficiency can be improved. Different from the conventional decoding solution, in the present invention, the decoding complexity does not rapidly increase as the quantity K' of coding branches increases, therefore a contradiction between the requirement for the spectral efficiency and the requirement for the decoding complexity and decoding efficiency is solved.

The following provides detailed description.

(1) calculating a measurement of each extended branch whose length is L.

A formula is $D_{i,j}^L = \sum_{n'=i}^{i+L-1} d_{n'}$, $j = 0 \sim 2^{L-1}$.

L is a segmented path length, and $L \leq L'$. When L' is very large, it is better if L is larger on the premise that calculation complexity is tolerable. Symbols in the OvCDM system are associated with each other. Therefore, by using the decoding method to which a segmented path measurement is applied in the present invention, a reference between the measurements is enhanced, and a selected decoding path is more reliable.

A segmented data stream starting from a node i in the Trellis diagram and having a length of L is $u_i$, $u_{i+1}$, ..., $u_{i+L}$, where i indicates an index of a frame symbol sequence. Measurements of a received symbolic data stream $y_i$, $y_{i+1}$, ..., $y_{i+L}$ and the segmented data stream are calculated, to obtain segmented path measurements of branches.

(2) calculating an average branch measurement.

An average branch measurement formula is

$$\overline{d}_i^r = \frac{1}{L} * \sum_{n'=i}^{i+L-1} d_{i'} = \frac{1}{L} * D_{i,\min}^L .$$

The segmented path measurements of the branches obtained in (1) are compared, to obtain the path corresponding to a smallest measurement. Then an averaging operation is performed on the path, to obtain an average branch measurement.

(3) calculating an accumulated branch measurement.

An accumulated branch measurement formula is $\overline{d}_i^e = \overline{d}_i^r + \alpha * \overline{d}_{i-1}^e$.

$\alpha$ indicates a weighting factor, and $\alpha$ is greater than or equal to 0.9 and is smaller than or equal to 1. $\alpha$ is determined by a flat fading width of the OvCDM system. As a decoding depth increases, a measurement of a node farther away from a current node has smaller impact. $\overline{d}_i^e$ indicates an accumulated branch measurement of the current node. $\overline{d}_i^r$ indicates an average branch measurement of the current node. $\overline{d}_{i-1}^e$ indicates an accumulated branch measurement of a previous node of the current node.

Average branch measurements of arrival nodes are obtained in (2). An accumulated branch measurement of $u_{i-1}$ is multiplied by a corresponding weighting factor, and is respectively added to the average branch measurements of the arrival nodes, to obtain accumulated branch measurements of the arrival nodes at a current moment.

When i = 0, the node is the original point, namely, a node at an initial moment. In this case, there is only an average branch measurement, and there is no accumulative measurement of a previous node. During calculation, mathematically, the average branch measurement of the original point may be directly made to be the accumulated branch measurement of the original point.

(4) Decoding rule

The accumulated branch measurements of the arrival nodes of $u_i$ at the current moment are obtained in (3). The measurements are compared, and a node with a smaller measurement is selected and extended. Likewise, a segmented data stream whose length is L is selected from the current node, and node measurement selection and extension are performed on the node according to the manner in (1) to (3). One arrival node is added after each extension.

In an embodiment, after a specific node is extended, only first $r_n$ arrival nodes and accumulated branch measurements thereof may be kept. $r_n$ is determined by a tolerable performance loss of the OvXDM system. Paths having relatively large average branch measurements, and measurements thereof are all discarded.

In an embodiment, when a signal-to-noise ratio is very large, extension may be directly performed forwards from a segmented path provided that the measurement of the segmented path is far smaller than that of other segmented paths, so that decoding complexity is further and significantly reduced.

(5) Decision output

Remaining data frame symbols are selected and extended according to the manner in (1) to (4), until the data frame ends. Decision output is performed on a path of an arrival node with a smallest average branch measurement, and this path is a final decoding result.

In the aforementioned process, the OvCDM system in which an input data stream is u={+1, -1, -1, -1, -1, +1, -1, +1, +1, -1, +1, -1, -1, -1, -1, +1}, K'=2, L'=2, L=2, $r_n$=4, and a coding matrix is $B = \begin{bmatrix} 1 & j \\ j & 1 \end{bmatrix}$ is used as an example. A Trellis diagram of the OvCDM system corresponding to these design parameters is shown in FIG. 23.

(1) Coding

Firstly, for K'=2, the input data stream $u$ is converted into two data streams, which are correspondingly as follows:

$$u_1 = \{+1, -1, -1, -1, +1, +1, -1, -1\}$$

$$u_2 = \{-1, -1, +1, +1, -1, -1, -1, +1\}$$

A convolution coefficient of each data stream is expressed as $b_0 = [1\ j]$, $b_1 = [j\ 1]$. Referring to the coding structure in FIG. 20 and the Trellis diagram in FIG. 23, coding output is $c$={1-$j$,-2,-2,0,2-2$j$,0,-2,-2}.

(2) Decoding

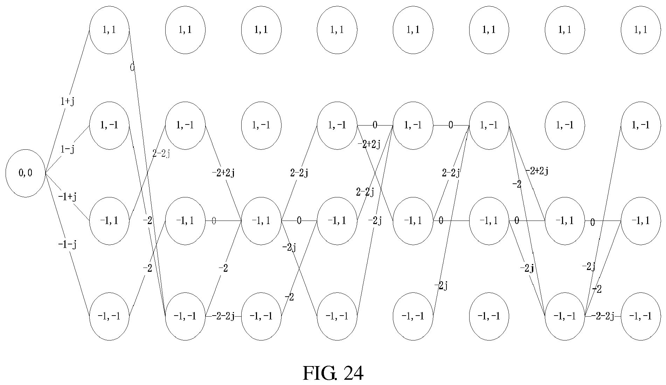

After signal synchronization, channel estimation, and digital processing are performed, the receiving end obtains a signal sequence. For ease of description, it is assumed that an ideal state is achieved. In this case, the received signal sequence is $c$={1-$j$,-2,-2,0,2-2$j$,0,-2,-2}. The received signal is decoded according to the decoding method to which a segmented path measurement is applied. A decoding path is shown in FIG. 24. A correct decoding result is finally obtained.

According to the decoding method and device applied to an OvXDM system, and the OvXDM system that are disclosed in the present invention, an access node in a Trellis diagram corresponding to the OvXDM system is selected in a decoding process. A superior path is selected by improving a method for calculating the accumulated branch measurement and with reference to a weighting factor. In addition, a node with a smallest accumulated branch measurement is extended, and a best decoding path is selected. When the present invention is applied to a decoding process of an OvXDM system in which a quantity of times of overlapped multiplexing or a quantity of coding branches is relatively large, design complexity and a calculation amount of the OvXDM system are reduced, so that the OvXDM system has a relatively low bit error rate, and performance thereof is improved.

The aforementioned content is a further detailed description of the present invention with reference to specific embodiments, and it should not be considered that specific implementation of the present invention is limited only to the description. A person of ordinary skill in the technical field to which the present invention belongs may further make simple derivations or replacements without departing from the inventive concept of the present invention.

**Claims**

1. A decoding method which is applied to an OvXDM system, and comprising the following steps:

   calculating an accumulated branch measurement of a node; and
   performing a decoding operation based on the accumulated branch measurement;
   wherein the accumulated branch measurement of any node is calculated by using the following steps:

   extending L nodes backwards from a node at a previous moment, to obtain all branches of a segmented data stream whose length is L, wherein L is an integer and is greater than 1;
   calculating measurements of the branches of the segmented data stream whose length is L, to respectively obtain segmented path measurements of the branches;
   selecting a smallest measurement from the segmented path measurements of the branches;
   dividing the smallest measurement by L, to obtain an average branch measurement of the node at a current moment; and
   adding the accumulated branch measurement of the node at the previous moment to the average branch measurement of the node at the current moment, so as to obtain the accumulated branch measurement of the node at the current moment.

2. The decoding method which is applied to an OvXDM system according to claim 1, before adding the accumulated branch measurement of the node at the previous moment to the average branch measurement of the node at the current moment, multiplying the accumulated branch measurement of the node at the previous moment by a weighting factor.

3. The decoding method which is applied to an OvXDM system according to claim 2, wherein the weighting factor is greater than or equal to 0.9 and is smaller than or equal to 1.

4. The decoding method which is applied to an OvXDM system according to any one of claims 1 to 3, wherein the OvXDM system is an OvTDM system, an OvFDM system, an OvCDM system, an OvSDM system, or an OvHDM system.

5. The decoding method which is applied to an OvXDM system according to claim 4, wherein the branch length L is smaller than or equal to a quantity of times of overlapped multiplexing of the OvXDM system when the OvXDM system is the OvTDM system or the OvFDM system; or the branch length L is smaller than or equal to a quantity of coding branches of the OvXDM system when the OvXDM system is the OvCDM system.

6. The decoding method which is applied to an OvXDM system according to claim 1, wherein the step of performing a decoding operation based on the accumulated branch measurement comprises: starting from a node at an initial moment, selecting a node, having a smallest accumulated branch measurement, from nodes which are extended from the node at the initial moment each time.

7. A decoding device which is applied to an OvXDM system, and comprising:

an accumulated branch measurement calculating module, configured for calculating an accumulated branch measurement of a node; and
a decoding module, configured for performing a decoding operation based on the accumulated branch measurement;
wherein the accumulated branch measurement calculating module comprises:

an extension module, configured for extending L nodes backwards from a node at a previous moment, to obtain all branches of a segmented data stream whose length is L, wherein L is an integer and is greater than 1;
a first calculation module, configured for calculating measurements of the branches of the segmented data stream whose length is L, to respectively obtain segmented path measurements of the branches;
a comparison module, configured for selecting a smallest measurement from the segmented path measurements of the branches;
an average branch measurement calculating module, configured for dividing the smallest measurement by L, to obtain an average branch measurement of the node at a current moment; and
an adder module, configured for adding the accumulated branch measurement of the node at the previous moment to the average branch measurement of the node at the current moment, so as to obtain the accumulated branch measurement of the node at the current moment.

8. The decoding device which is applied to an OvXDM system according to claim 7, further comprising:
a weighting factor module, configured for multiplying the accumulated branch measurement of the node at the previous moment by a weighting factor before adding the accumulated branch measurement of the node at the previous moment to the average branch measurement of the node at the current moment.

9. The decoding device which is applied to an OvXDM system according to claim 8, wherein the weighting factor is greater than or equal to 0.9 and is smaller than or equal to 1.

10. The decoding device which is applied to an OvXDM system according to any one of claims 7 to 9, wherein the branch length L is smaller than or equal to a quantity of times of overlapped multiplexing of the OvXDM system when the OvXDM system is an OvTDM system or an OvFDM system; or the branch length L is smaller than or equal to a quantity of coding branches of the OvXDM system when the OvXDM system is an OvCDM system.

11. The decoding device which is applied to an OvXDM system according to claim 7, wherein the decoding module comprises:
a smallest accumulated branch measurement extending module, configured for starting from a node at an initial moment, selecting a node, having a smallest accumulated branch measurement, from nodes which are extended from the node at the initial moment each time.

**12.** An OvXDM system, comprising the decoding device as claimed in claims 7 to 11.

**13.** The OvXDM system according to claim 12, wherein the OvXDM system is an OvTDM system, an OvFDM system, an OvCDM system, an OvSDM system, or an OvHDM system.

Calculating an accumulated branch
measurement of a node — **S100**

↓

Performing a decoding operation
according to a specific decoding rule — **S300**

FIG. 1

Generating L nodes that are extended backwards from a node at a
previous moment, to obtain all branches of a segmented data stream
whose length is L — **S101**

↓

Calculating measurements of the branches of the segmented data
stream whose length is L, to respectively obtain segmented path
measurements of the branches — **S103**

↓

Selecting a smallest measurement from
the segmented path measurements of the branches — **S105**

↓

Dividing the smallest measurement by L, to obtain
an average branch measurement of the node at a current moment — **S107**

↓

Adding the accumulated branch measurement of the node at the
previous moment to the average branch measurement of the node at the
current moment, to obtain the accumulated branch measurement of the
node at the current moment — **S109**

FIG. 2

Accumulated branch measurement
calculating module **100**

Decoding
module
**300**

FIG. 3

| | | |
|---|---|---|
| Extension module **101** | First calculation module **103** | Comparison module **105** |

| |
|---|
| Average branch measurement calculating module **107** |

| | |
|---|---|
| Adder module **109** | Weighting factor module **111** |

FIG. 4

$H(f)$     $H(f - i \times \Delta B)$     $S(f)$     Time domain     Transmitted signal

Spectrum signal → Spectrum shift → $X$ → $\Sigma$ → Inverse Fourier transformation →

Input data sequence: $x_i$

OvFDM modulation unit

FIG. 5

$$A_0X_0 \quad A_1X_0 \quad A_2X_0 \quad \cdots \quad A_{k-1}X_0$$

$$A_0X_1 \quad A_1X_1 \quad A_2X_1 \quad \cdots \quad A_{k-1}X_1$$

$$A_0X_2 \quad A_1X_2 \quad A_2X_2 \quad \cdots \quad A_{k-1}X_2$$

$$\cdots$$

$$A_0X_{k-1} \quad A_1X_{k-1} \quad A_2X_{k-1} \quad \cdots \quad A_{k-1}X_{k-1}$$

FIG. 6

Block diagram of signal reception in OvFDM

(a)

Block diagram of received signal detection in OvFDM

(b)

FIG. 7

FIG. 8

FIG. 9

FIG. 10

FIG.11

$h(t)$  
Envelope waveform

$h(t - i \times \Delta T)$  
Shift

X

$\Sigma$ $s(t)$

Transmitted signal

Input data sequence: $x_i$

OvTDM modulation unit

FIG. 12

$a_0 x_0 \quad a_1 x_0 \quad a_2 x_0 \quad \cdots \quad a_{k-1} x_0$

$a_0 x_1 \quad a_1 x_1 \quad a_2 x_1 \quad \cdots \quad a_{k-1} x_1$

$a_0 x_2 \quad a_1 x_2 \quad a_2 x_2 \quad \cdots \quad a_{k-1} x_2$

$\cdots$

$a_0 x_{k-1} \quad a_1 x_{k-1} \quad a_2 x_{k-1} \quad \cdots \quad a_{k-1} x_{k-1}$

FIG. 13

Synchronization → Channel estimation → Digital processing

Preprocessing unit

(a)

Received signal

Analysis unit memory

Comparator

Retained path memory 1

Euclidean distance memory 1

...

Retained path memory n

Euclidean distance memory n

Decision output

Sequence detection unit

(b)

FIG. 14

FIG. 15

FIG. 16

FIG. 17

FIG.18

FIG. 19

FIG. 20

$$B = \begin{bmatrix} b_{0,0} & b_{0,1} & \cdots & b_{0,L'-1} \\ b_{1,0} & b_{1,1} & \cdots & b_{1,L'-1} \\ & & \cdots & \\ b_{K'-1,0} & b_{K'-1,1} & \cdots & b_{K'-1,L'-1} \end{bmatrix}$$

FIG. 21

FIG. 22

FIG. 23

FIG. 24

## INTERNATIONAL SEARCH REPORT

| International application No. |
| --- |
| **PCT/CN2017/091961** |

**A. CLASSIFICATION OF SUBJECT MATTER**

H04L 1/00 (2006.01) i

According to International Patent Classification (IPC) or to both national classification and IPC

**B. FIELDS SEARCHED**

Minimum documentation searched (classification system followed by classification symbols)

H04L; H03M; H04J

Documentation searched other than minimum documentation to the extent that such documents are included in the fields searched

Electronic data base consulted during the international search (name of data base and, where practicable, search terms used)

CNPAT; WPI; EPODOC; CNKI; IEEE: measure, overlap, multiplexing, OV?DM, decod+, calculat+, accumulative, add+, branch path, metric, extend+, expand+, node, select+, minimum, average

**C. DOCUMENTS CONSIDERED TO BE RELEVANT**

| Category* | Citation of document, with indication, where appropriate, of the relevant passages | Relevant to claim No. |
| --- | --- | --- |
| A | CN 103427850 A (ZTE CORP.), 04 December 2013 (04.12.2013), description, paragraphs [0027]-[0032] | 1-13 |
| A | CN 101997553 A (ZTE CORP.), 30 March 2011 (30.03.2011), the whole document | 1-13 |
| A | CN 101262232 A (SHANDONG UNIVERSITY), 10 September 2008 (10.09.2008), the whole document | 1-13 |
| A | US 2011075649 A1 (RESEARCH INSTITUTE OF TSINGHUA UNIVERSITY IN SHENZHEN), 31 March 2011 (31.03.2011), the whole document | 1-13 |

☐ Further documents are listed in the continuation of Box C.  ☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 12 September 2017 (12.09.2017) | **30 September 2017 (30.09.2017)** |

| Name and mailing address of the ISA/CN:<br>State Intellectual Property Office of the P. R. China<br>No. 6, Xitucheng Road, Jimenqiao<br>Haidian District, Beijing 100088, China<br>Facsimile No.: (86-10) 62019451 | Authorized officer<br><br>**LIN, Guirong**<br><br>Telephone No.: (86-10) **62413380** |

Form PCT/ISA/210 (second sheet) (July 2009)

**INTERNATIONAL SEARCH REPORT**
Information on patent family members

International application No.

**PCT/CN2017/091961**

| Patent Documents referred in the Report | Publication Date | Patent Family | Publication Date |
|---|---|---|---|
| CN 103427850 A | 04 December 2013 | None | |
| CN 101997553 A | 30 March 2011 | None | |
| CN 101262232 A | 10 September 2008 | None | |
| US 2011075649 A1 | 31 March 2011 | None | |

Form PCT/ISA/210 (patent family annex) (July 2009)